# EUROPÄISCHE PATENTSCHRIFT

(11) **EP 1 063 125 B1**
(45) Veröffentlichungstag und Bekanntmachung des Hinweises auf die Patenterteilung: **24.07.2002**
(21) Anmeldenummer: 00108886.3
(22) Anmeldetag: 27.04.2000
(51) Int. Cl.: B60R 1/06

(54) **Stellantrieb für ein Kraftfahrzeug**
Actuator for a motor vehicle
Actionneur pour véhicule à moteur

(30) Priorität: 29.04.1999 DE 19919529
(43) Veröffentlichungstag der Anmeldung: 27.12.2000
(73) Patentinhaber: Bühler Motor GmbH, 90459 Nürnberg (DE)
(72) Erfinder: Guttenberger, Richard, 91171 Greding (DE); Seichter, Werner, 91166 Georgensgmünd (DE)

(56) Entgegenhaltungen:
- WO-A-98/31565
- DE-A- 2 453 498
- DE-A- 3 026 561
- US-A- 4 116 538
- US-A- 5 467 230

## Beschreibung

Die Erfindung betrifft einen Stellantrieb für ein Kraftfahrzeug, wobei ein erstes Element an dem Fahrzeug festlegbar ist und ein mit dem ersten Element um zumindest eine Schwenkachse schwenkbar verbundenes zweites Element eine Halterung für ein Stellglied aufweist, das zweite Element mit zumindest einem, von einem Antrieb zwischen dem ersten und dem zweiten Element betätigbaren, Verstellelelment und zumindest einem, an dem ersten Element anliegenden, Reibelement verbunden ist.

Aus der DE-PS 30 26 561 ist bereits ein gattungsgemässer Stellantrieb bekannt, für dessen Verstellung um zwei zueinander senkrechte Achsen, Verstellelemente in Form von Zahnstangen vorgesehen sind, die von einem Antrieb betätigt werden und für dessen verbesserter Vibrationsdämpfung Reibelemente in Form von Kugelschalensegmenten vorhanden sind.

Der bekannte Stellantrieb weist den Nachteil auf, daß die Verstellelemente innerhalb des Antriebsgehäuses untergebracht sind und somit von den Schwenkachsen einen relativ geringen Abstand besitzen. Daher ist auch das Verstellmoment, das vom Antrieb auf das Stellglied ausgeübt wird relativ gering. Ein weiterer Nachteil besteht in den undefinierten Reibkräften, die von den Kugelschalensegmenten erzeugt werden. Da diese aus Kunststoffmaterial bestehen, kann ihre elastische Wirkung im Laufe der Zeit nachlassen.

Daher ist es Aufgabe der vorliegenden Erfindung bei einem gattungsgemäßen Stellantrieb für ein besonders hohes Verstellmoment und eine über die Lebensdauer möglichst konstante Reibkraft zu sorgen, wobei die Teileanzahl so gering wie möglich und die Montierbarkeit besonders einfach ist.

Diese Aufgabe wird erfindungsgemäß dadurch gelöst, daß zumindest ein Reibelement mit einem Verstellelement ein einstückiges Reib-Verstellelement bilden, das als Verbindungsmittel zwischen dem ersten und dem zweiten Element dient und das Reib-Verstellelement auf Zug belastet ist.

Durch die Anordnung der Reib-Verstellelemente an der Außenseite des ersten Elements ist ein besonders hohes Verstellmoment möglich und durch den großen Reibradius die Vibrationsdämpfung besonders günstig und die Haltekraft besonders hoch. Durch die Zug-Belastung werden diese günstigen Wirkungen weiter verstärkt, weil dadurch Spielfreiheit hergestellt wird.

Das Reib-Verstellelement besteht vorzugsweise aus einem Metallband oder einem Verbundteil mit mindestens einem verzahnten Bereich, da diese Ausbildung eine besonders einfache Herstellbarkeit erlaubt, und eine ausreichende Festigkeit besitzt. Die Verzahnung kann in das Metallband eingeprägt sein, durch Lochen, Tiefziehen oder Stanzen und Biegen hergestellt sein. Das Reib-Verstellelement kann auch als technisches Kunststoffteil ausgebildet sein, insbesondere wenn besondere Anforderungen an die Qualität der Verzahnung gestellt werden.

Vorzugsweise ist zumindest ein Reib-Verstellelement über Verbindungsstellen mit dem zweiten Element verbunden.

Eine zweite Lösung der Aufgabe wird dadurch erreicht, daß eine mehrgliedrige Kette das Verstellelement und das Reibelement bildet, wobei die Kette auf Zug belastet ist. Die Kette weist den Vorteil auf in alle Richtungen beweglich zu sein, wodurch sie den Bewegungen eines Stellglieds in allen Richtungen folgen kann.

Vorzugsweise greift der Antrieb in oder zwischen die Kettenglieder ein um eine getriebliche Kupplung herzustellen, dadurch sind gesondert einzubringende Verzahnungen nicht erforderlich.

Um die Verschwenkung des zweiten Elements um zwei zueinander senkrechte Achsen zu ermöglichen, sind zwei Reib-Verstellelemente oder zwei Ketten vorgesehen.

Eine bevorzugte Weiterbildung derErfindung wird dadurch erreicht, daß die beiden Reib-Verstellelemente unabhängig voneinander antreibbar sind, jedes Reib-Verstellelement an zumindest zwei der Verbindungsstellen mit dem zweiten Element verbunden ist, bei Verwendung zweier Verbindungsstellen je Reib-Verstellelement, jeweils eine Verbindungsstelle des zweiten Elements mit dem ersten Reib-Verstellelement auf eine Verbindungsstelle des zweiten Elements mit dem zweiten Reib-Verstellelement folgt, wobei die Verbindungsstellen in einem gleichmäßigen Winkelabstand von 90° in bezug auf einen Schnittpunkt der beiden Schwenkachsen angeordnet sind, jedes Reib-Verstellelement das erste Element umfaßt und die Reib-Verstellelemente zumindest teilweise im oder am ersten Element geführt sind.

Durch die unabhängig voneinander antreibbaren Reib-Verstellelemente können die Verzahnungen einfach ausgeführt sein, weil keine oder nur geringe nichtaxiale Bewegungen auftreten. Durch die beiden Verbindungsstellen der Reib-Verstellelemente mit dem zweiten Element kann das erste Element umfaßt werden, wodurch das zweite Element sicher am ersten Element gehalten ist. Um die Reib-Verstellelemente in Ihrer Lage zu sichern sind Führungen im oder am ersten Element vorgesehen.

Da die beiden Reib-Verstellelemente sich an einer Stelle kreuzen, ist es erforderlich das erste Element so zu formen, daß sich die beiden Reib-Verstellelemente nicht gegenseitig behindern. Den gleichen Effekt könnte man bei entsprechender Ausbildung der Reib-Verstellelemente erreichen. Insbesondere bei Verwendung von dünnen Metallbändem findet keine Behinderung zwischen den beiden Reib-Verstellelementen statt, auch wenn diese aufeinander gleiten. Dadurch ist das erste Element besonders einfach gestaltbar. Die beiden Reib-Verstellelemente können dann sogar im wesentlichen im gleichen Abstand zum Schnittpunkt der Schwenkachsen verlaufen.

Bei Verwendung von großvolumigen Reib-Verstellelementen kann es notwendig werden die beiden Reib-Verstellelemente auf unterschiedlichen Bahnen und zumindest teilweise mit unterschiedlichem Abstand zum Schnittpunkt der Schwenkachsen anzuordnen, damit keine gegenseitige Behinderung stattfinden kann.

Es ist besonders vorteilhaft sowohl im Stillstand, als auch im Betrieb Zugkräfte auf die Reib-Verstellelemente wirken zu lassen, wodurch jedes Spiel zwischen dem ersten und dem zweiten Element ausgeschlossen ist. Die Zugkräfte können beispielsweise dadurch erreicht werden, daß zumindest ein Reib-Verstellelement mit einem federnden Bereich ausgebildet ist, wobei besonders bevorzugt wird den federnden Bereich in Wellenform auszuführen, da hierdurch sehr genau der gewünschte maximale Federweg eingestellt werden kann. Im montierten Zustand sind die federnden Bereiche voll gestreckt, um einen Totlauf im Betrieb möglichst auszuschließen.

Nach einem weiteren wesentlichen Merkmal der Erfindung ist das zweite Element im wesentlichen steif ausgebildet, hierdurch werden Vibrationen des Stellglieds entscheidend unterdrückt.

In Weiterbildung der Erfindung ist das zweite Element mit einem ringförmigen Rand/einer ringförmigen Wandung versehen, der/die eine besonders versteifende Wirkung auf das zweite Element hat. An diesem Rand/dieser Wandung sind die Verbindungsstellen zu dem zumindest einen Reib-Verstellelement angeformt. Dadurch werden die Verstellkräfte am günstigsten auf das gesamte zweite Element übertragen.

Nach einer besonders einfach zu montierenden Weiterbildung der Erfindung werden die Verbindungsstellen in Form von aus der Ringinnenfläche vorspringenden Mitnehmem gebildet. Weiter sind diese Mitnehmer Kreisring-Segmentförmig ausgebildet, dadurch können die Mittelpunkte der Kreisringsegmente auf den Schwenkachsen liegen und dennoch Schwenkbewegungen der Reib-Verstellelemente zugelassen und große Momente übertragen werden.

Durch am zweiten Element vorgesehene Federmittel, an denen die Verbindungsstellen zwischen den Reib-Verstellelementen und dem zweiten Element angeformt sind, können die Reib-Verstellelemente ohne federnden Bereich ausgebildet werden. Die Federmittel sind einfach durch Einbringen einer schlitzförmiten Freisparung im zweiten Element ausbildbar.

Zumindest ein Reib-Verstellelement ist gelenkig mit dem zweiten Element verbunden, dadurch ist es nicht nötig die Reib-Verstellelemente mit einer gewölbten Verzahnung zu versehen.

Um Gewicht zu sparen, eine einfache Herstellbarkeit zu erlauben und dennoch eine ausreichende Festigkeit des zweiten Elements zu erreichen, kann dieses aus einem Aluminium-Tiefziehteil, einem Alu-Druckgußteil oder einem Magnesium-Druckgußteil ausgebildet sein.

Eine besonders Bauteilarme Konstruktion wird dadurch erreicht, daß zwischen dem ersten und dem zweiten Element keine gesonderten Befestigungsmittel vorgesehen sind. Dies ist möglich, weil die Reib-Verstellelemente als Befestigungselemente ausreichen. Als Verdrehsicherung zwischen dem ersten und dem zweiten Element wird eine mit Führungen und Nuten versehene Kalotte vorgesehen. Durch die Verdrehsicherung ist ein sicheres und genaues Positionieren möglich.

Zweckmäßigerweise sind im ersten Element Ausnehmungen vorgesehen, durch welche Getriebemittel des Antriebes mit den einstückigen Reib-Verstellelementen in Eingriff kommen können.

Durch die besonderen geometrischen Gegebenheiten bei der Verstellung eines Stellglieds um zwei senkrecht zueinander angeordneten Schwenkachsen, kann es bei bestimmten Stellungen notwendig werden, daß die Reib-Verstellelemente rechtwinklig zur Verstellrichtung flexibel ausgebildet sind, wobei die Reib-Verstellelemente an den Verbindungsstellen mit dem zweiten Element seitlich fixiert werden können. Bei starrer Ausbildung sind jedoch seitliche Ausweichmöglichkeiten der Reib-Verstellelemente in den Verbindungsstellen notwendig.

Aufgrund der geometrischen Gegebenheiten können die Winkel der Reib-Verstellelemente zueinander in den Extremstellungen des zweiten Elements geringfügig von 90° abweichen. Daher ist es gegebenenfalls erforderlich, daß bei starrer Ausbildung zumindest ein Reib-Verstellelement an zumindest einer Verbindungsstelle mit dem zweiten Element seitliche Ausweichmöglichkeiten besitzt.

Bei gelenkiger Anbindung der Reib-Verstellelemente am zweiten Element, ist es sinnvoll die Reib-Verstellelemente am ersten Element in Führungen seitlich zu führen. Vorzugsweise wird eine beiderseitige Führung verwendet.

Wird zumindest eines der Reib-Verstellelemente in den Führungen mit keinem oder nur sehr geringem Spiel längsbeweglich gelagert, ist dadurch eine Verdrehsicherung zwischen dem ersten Element und dem zweiten Element erreicht. Eine zusätzliche Verdrehsicherung wird dadurch überflüssig. Um die Beweglichkeit des zweiten Elements gegenüber dem ersten Element nicht einzuschränken, ist zumindest ein Reib-Verstellelement mit deutlichem Spiel in den Führungen längsbeweglich und geringfügig seitlich beweglich gelagert. Es bietet sich an die Führungen zumindest teilweise nutartig auszubilden.

Der verzahnte Bereich zumindest eines Reib-Verstellelements kann dem ersten Element zugewandt sein oder um ca. 90° dazu angeordnet sein. Dadurch sind unterschiedliche Getriebebauarten verwendbar. Es ist auch möglich zumindest den Teil eines Reib-Verstellelements, der den verzahnten Bereich trägt, in das innere des ersten Elements hineinragen zu lassen.

Um zu vermeiden, daß das Reib-Verstellelement und das Getriebemittel bei großer Last oder Betätigung des Antriebs an einem Endanschlag des Spiegels außer Eingriff gerät, kann zumindest ein Reib-Verstellelement mindestens im Eingriffsbereich mit dem Getriebemittel durch ein Abstützmittel abgestützt werden.

Wird dagegen ein solches Abstützmittel weggelassen, dann kann das Getriebemittel bei hoher Last u.U. über den verzahnten Bereich des Reib-Verstellelements überrasten. Dadurch wird eine zusätzliche Überlastkupplung überflüssig.

Die Abstützung eines Reib-Verstellelements kann erreicht werden, indem es ein Abstützelement zumindest teilweise hintergreift. Dabei kann das Abstützelement auch als Schnappverbindung ausgeführt sein. Diese erleichtert die Montage des Reib-Verstellelements, insbesondere wenn die Schnappverbindung in Form von Schnapphaken ausgebildet ist. Die Führungen und/oder die Schnappverbindung sind/ist einstückig mit dem ersten Element. Die Abstützmittel sind vorzugsweise einstückig mit dem ersten Element oder einstückig mit dem zweiten Element.

Eine weitere Möglichkeit, die Montage zu vereinfachen besteht darin, das Abstützmittel über ein Filmschamier mit dem ersten Element zu verbinden, wobei das Abstützmittel in seiner Endmontagestellung über eine Schnappverbindung gehalten wird.

Um die Montage der Reib-Verstellelemente einfacher zu gestalten, kann zwischen dem ersten Element und dem zweiten Element ein Federelement angeordnet sein. Dieses Federelement ist dabei im einfachsten Fall mit dem ersten Element oder dem zweiten Element einstückig, es kann aber auch ein zusätzliches Federelement vorgesehen sein. Dabei versucht das Federelement das zweite Element vom ersten Element weg zu bewegen und zumindest ein Reib-Verstellelement hält das zweite Element gegen die Federwirkung des Federelements am ersten Element. Bei der Montage des Reib-Verstellelements kann das zweite Element durch ein Montagewerkzeug gegen die Federwirkung der Feder gegen das erste Element gedrückt werden. Dadurch lassen sich die Enden des Reib-Verstellelements einfacher mit den vorspringenden Mitnehmern am zweiten Element verbunden werden. Nach der Montage sorgt die Feder dann für Spielfreiheit zwischen dem ersten und dem zweiten Element und zwischen dem Reib-Verstellelement und dem ersten sowie dem zweiten Element. Eine ähnliche Montagevereinfachung ist auch erreichbar, wenn ein Reib-Verstellelement mit einem federnden Bereich versehen ist, oder wenn das zweite Element im Bereich der Verbindungsstellen als Federmittel ausgebildet ist.

Für die Ausbildung des Stellantriebs mit Memorybetrieb wird vorgeschlagen die Wandung des ersten Elements mit Ausnehmungen zu verstehen, durch welche zumindest eine Positionsermittlungseinrichtung mit den Reib-Verstellelementen gekoppelt werden kann. Dabei kann ein Teil der Positionsermittlungseinrichtung innerhalb des ersten Elements angeordnet sein und ein zweiter Teil fest mit einem Reib-Verstellelement verbunden sein, wobei eine Verbindung zwischen den beiden Teilen durch die Wandung des ersten Elements hergestellt wird. Eine weitere Möglichkeit eine Memoryeinrichtung zu montieren besteht darin, die Positionsermittlungseinrichtung nachträglich von außen auf das erste Element aufzusetzen und mechanisch sowie elektrisch mit diesem zu verbinden. Hierdurch ist eine Art modularer Aufbau gegeben, der eine weniger aufwendige Lagerhaltung verschiedenartiger Antriebe bzw. Antriebsteile erlaubt.

Als besonders günstig erweist sich die Möglichkeit die elektrischen Verbindungen der Positionsermittlungseinrichtung mit den Anschlüssen des Spiegels über Leitbleche zu realisieren, wobei diese Leitbleche in das erste Element eingespritzt sein können.

Der erfindungsgemäße Stellantrieb eignet sich insbesondere zur Betätigung eines Kfz-Rückblickspiegels.

Die Erfindung wird nachfolgend anhand von Ausführungsbeispielen näher erläutert.

Es zeigen
- Fig. 1: eine vereinfachte räumliche Darstellung eines Stellantriebes mit einem ersten und einem zweiten Element,
- Fig. 2: eine weitere vereinfachte räumliche Darstellung eines Teils des Stellantriebes,
- Fig. 3: ein Reib-Verstellelement in Form eines Metallbandes mit einer Verzahnung,
- Fig. 4: eine erste Variante der Verzahnung des Metallbandes,
- Fig. 5: eine zweite Variante der Verzahnung des Metallbandes
- Fig. 6: eine räumliche Darstellung des zweiten Elements,
- Fig. 7: eine zweite räumliche Darstellung des Stellantriebes aus anderer Perspektive,
- Fig. 8: eine vereinfachte Schnittdarstellung des Stellantriebes,
- Fig. 9: eine zweite Ausführungsart der Erfindung,
- Fig. 10: eine räumliche Darstellung einer Variante des zweiten Elements,
- Fig. 11: eine Außenansicht des Stellantriebs mit Führungen,
- Fig. 12: eine erste Ausführungsform einer Abstützung,
- Fig. 13: eine zweite Ausführungsform der Abstützung,
- Fig. 14: eine dritte Ausführungsform der Abstützung und
- Fig. 15: eine vierte Ausführungsform einer Abstützung.

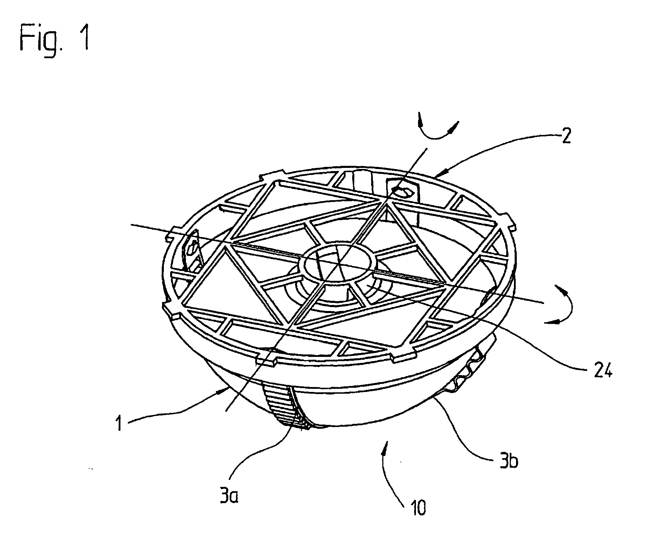

Fig. 1 zeigt einen Stellantrieb 10, mit einem ersten Element 1, einem zweiten Element 2, das von zwei Reib-Verstellelementen 3a, 3b um zwei zueinander rechtwinklige Schwenkachsen 5a, 5b schwenkbar ist, wobei das erste Element 1 auf dem zweiten Element 2 in einem Schwenklager 24 gelagert ist. Das erste Element 1 ist vorzugsweise zweiteilig als Gehäuse ausgebildet.

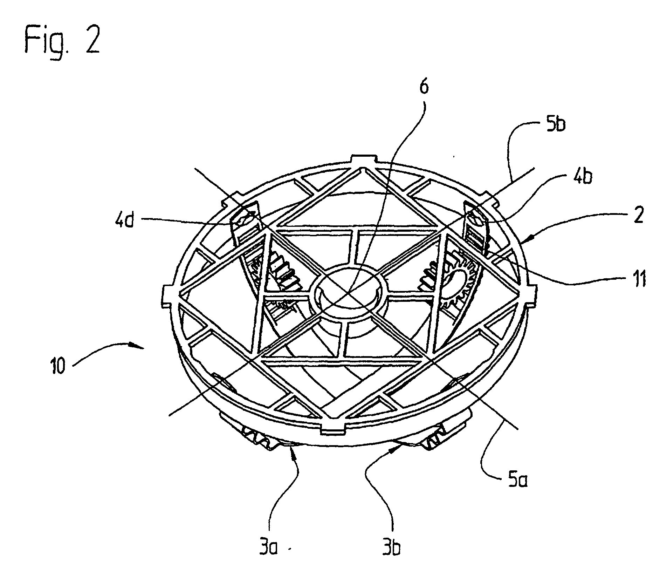

In Fig. 2 ist der gleiche Stellantrieb 10, der besseren Übersicht halber, ohne das erste Element dargestellt. Fig. 2 zeigt die Reib-Verstellelemente 3a, 3b, die an Verbindungsstellen 4a, 4b, 4c, 4d mit dem zweiten Element 2 verbunden sind, wobei jeweils eine Verbindungsstelle 4a, 4b des Reib-Verstellelements 3a mit dem zweiten Element auf eine Verbindungsstelle, 4c, 4d des Reib-Verstellelements 3b mit dem zweiten Element folgt und die Abstände der Verbindungsstellen 4a, 4b, 4c, 4d um einen Schnittpunkt 6 der Schwenkachsen 5a, 5b gleichmäßig verteilt sind. Weiter sind Getriebemittel in Form von Zahnrädern dargestellt, die als Teil eines Antriebes zur Betätigung der Reib-Verstellelemente 3a, 3b in verzahnte Bereiche 11 der Reib-Verstellelemente 3a, 3b eingreifen.

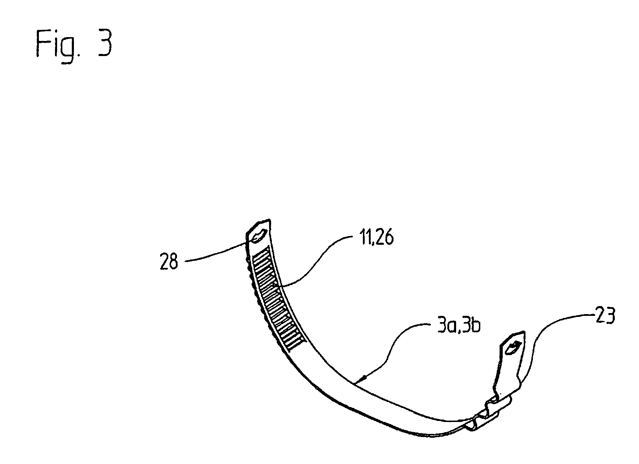

Fig. 3 Zeigt ein Ausführungsbeispiel für das Reib-Verstellelement 3a, 3b, mit dem verzahnten Bereich 11, der als eingeprägte Verzahnung 26 ausgebildet ist, Verbindungsöffnungen 28, die kreisringsegmentförmig geformt sind und einem federnden Bereich 23, der wellenförmig ist.

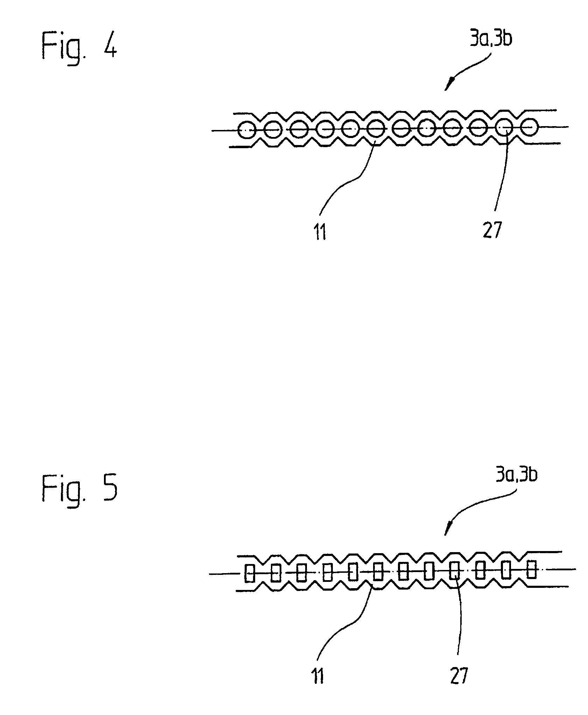

Fig. 4 und Fig. 5 zeigen Varianten des Verzahnten Bereiches 11 der Reib-Verstellelemente 3a, 3b, wobei die Verzahnung jeweils als Lochung 27 ausgebildet ist. In Fig. 4 ist die Lochung 27 rund, in Fig. 5 rechteckförmig.

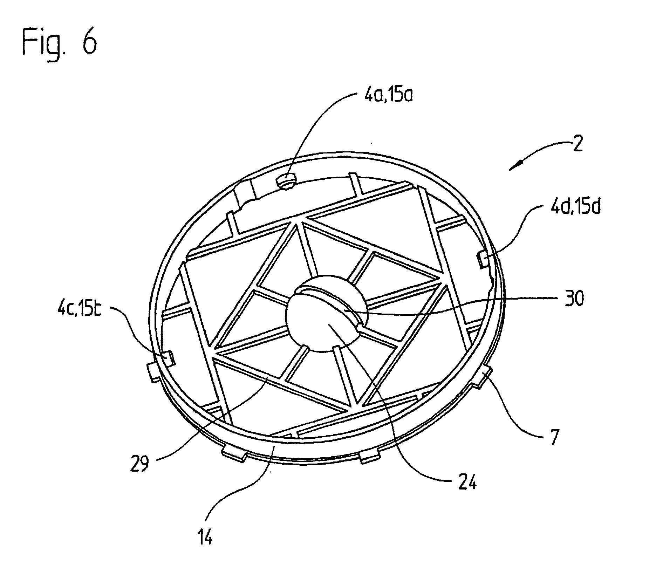

Fig. 6 zeigt das zweite Element 2, das als tiefgezogenes Aluminiumteil ausgebildet ist, mit einem/einer ringförmigen Rand/Wandung 14, dem Schwenklager 24, Halterungen 7 für ein Stellglied, wie einen Spiegel (gewöhnlich mit Spiegelglasträger), Verbindungsstellen 4a, 4b, 4c, 4d und Verstrebungen 29 zur Verbindung des/der ringörmigen Randes/Wandung 14 mit dem Schwenklager 24. Die Verbindungsstellen 4a, 4b, 4c, 4d sind in Form von aus der Innenfläche des/der ringförmigen Randes/Wandung 14 vorspringender Mitnehmer 15a, 15b, 15c, 15d ausgebildet, die kreisringsegmentförmig geformt sind, damit die jeweiligen Drehpunkte der Verbindungsstellen 4a, 4b, 4c, 4d auf den entsprechenden Schwenkachsen 5a, 5b liegen. Bei Spiegelantrieben sollen die Schwenkachsen nämlich möglichst nahe an der spiegelnden Fläche liegen. Das Schwenklager 24 ist mit einer Nut 30 versehen, die Teil einer Verdrehsicherung ist.

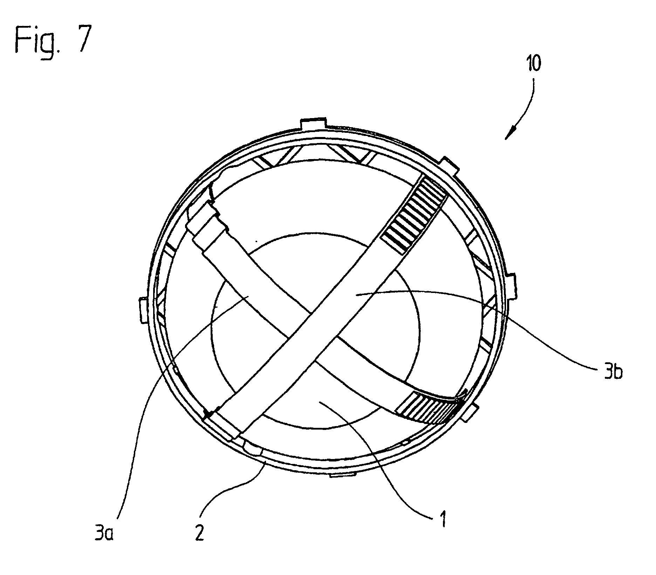

Fig. 7 ist eine zweite räumliche Darstellung des Stellantriebs 10 aus einer anderen Perspektive. Hier sind die Reib-Verstellelemente 3a, 3b um das erste Element 1 herumgelegt und mit dem zweiten Element 2 verbunden, dabei sind die Reib-Verstellelemente so geführt, daß sie sich nicht gegenseitig behindern können. Weiter können Befestigungsmittel in Form von Befestigungsaugen zur Befestigung des Stellantriebes an ein karosseriefestes Teil dienen.

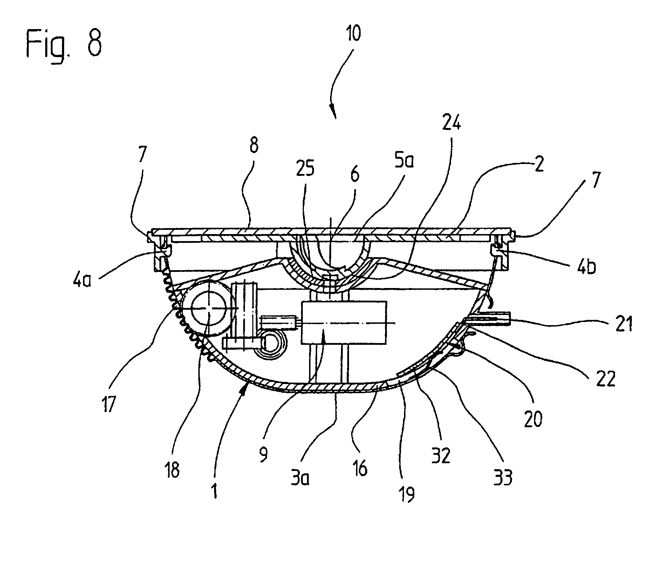

Fig. 8 zeigt eine vereinfachte Schnittdarstellung des Stellantriebs 10, mit dem zweiteiligen ersten Element 1, dem zweiten Element 2, dem Schnittpunkt 6 der Schwenkachsen 5a, 5b, dem Antrieb 9 mit dem Getriebemittel 18, das über eine Ausnehmung 17 in einer Wandung 16 des ersten Elements 1 in den verzahnten Bereich des Reib-Verstellelements 3a eingreift, wobei das Reib-Verstellelement 3a um das erste Element 1, das zumindest teilweise kugelförmig und/oder zylinderförmig geformt ist, herumgelegt ist und über die Verbindungsstellen 4a, 4b mit dem zweiten Element verbunden ist. Fig. 8 zeigt weiter das Schwenklager 24 mit einer Kalotte 25 und die Halterungen 7 für das Stellglied 8 am zweiten Element 2, sowie eine Positionsermittlungseinrichtung 20, die teilweise aus dem Reib-Verstellelement 3a oder einem daran befestigten Teil, z.B. einen Schleifer 33 , das durch eine Ausnehmung 19 in der Wandung 16 geführt wird und einem fest im ersten Element 1 montierten Bauteil, z.B. einer Leiterplatte 32 mit Potentiometerbahnen besteht. Die elektrischen Verbindungen zu einem Anschluß 21 kann über Leitbleche 22 erfolgen, die beispielsweise im ersten Element 1 eingespritzt sind.

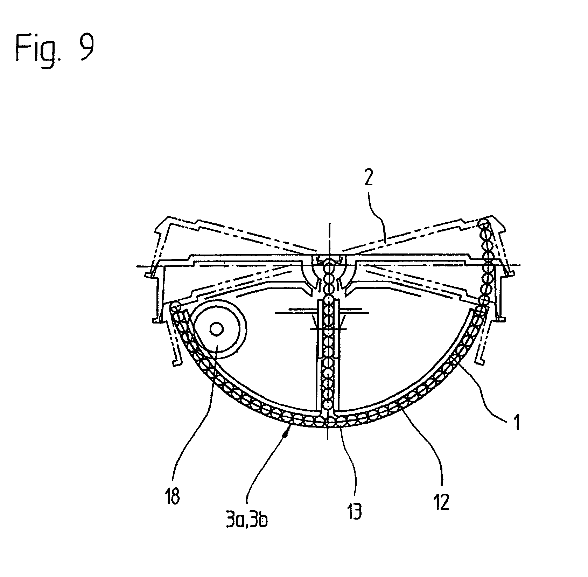

Fig. 9 zeigt eine zweite Ausführungsform der Erfindung, bei der eine aus einer Vielzahl von Kettengliedern 13 bestehende Kette 12, z.B. eine Kugelkette als Reib-Verstellelement 3a, 3b verwendet wird, wobei die Kettenglieder durch ihre Formgebung eine Verzahnung bilden in die das Getriebemittel 18 direkt eingreift.

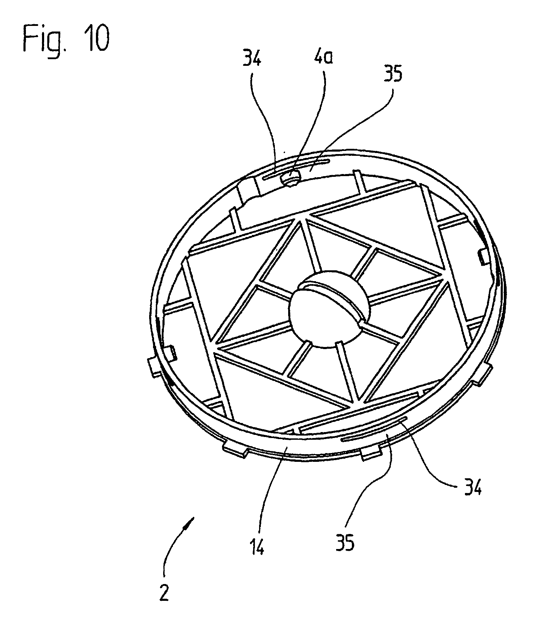

Fig. 10 zeigt eine Variante des zweiten Elements 2, in dessen ringförmigem/ringförmiger Rand/Wandung 14 Freisparungen 34 eingeformt sind, wodurch Federmittel 35 entstehen, die mit den Verbindungsmitteln 4a, 4b, 4c, 4d versehen sind. Auf diese Weise kann auf die federnden Bereiche der Reib-Verstellelemente verzichtet werden.

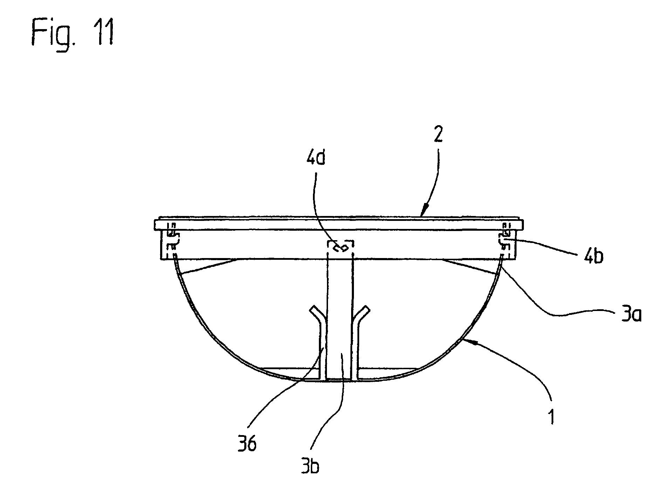

Fig. 11 zeigt eine Außenansicht des Stellantriebs, mit dem ersten Element 1, das nutartige Führungen 36 aufweist, in denen die Reib-Verstellelemente 3a, 3b verlaufen, deren Enden über die Verbindungsstellen 4b, 4d mit dem zweiten Element 2 in Verbindung stehen.

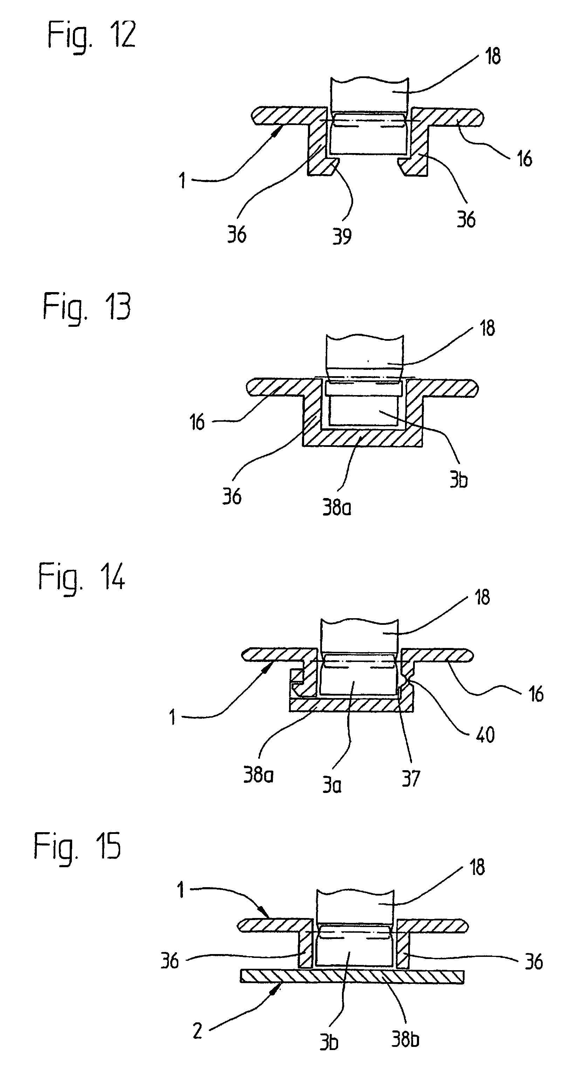

Fig. 12 zeigt eine erste Ausführungsform einer Abstützung für das Reib-Verstellelement 3a in Form von Schnappverbindungen 39. Die Schnappverbindungen sind dabei im Eingriffsbereich des Getriebemittels 18 in den verzahnten Bereich des Reib-Verstellelements angeordnet. In Fig. 13 ist eine zweite Ausführungsform der Abstützung 38a dargestellt, die dabei als Steg ausgebildet ist, der die beiden Führungen 36 miteinander verbindet. In Fig. 14 ist eine dritte Ausführungsform der Abstützung 38a dargestellt, bei der ein Steg mit einer der Führungen 36 über ein Filmschamier 40 und mit der zweiten Führung 36 über eine Schnappverbindung verbunden ist. Eine vierte Ausführungsform der Abstützung zeigt Fig. 15, dabei ist die Abstützung 38b mit dem zweiten Element 2 einstückig.

### Bezugszeichenliste

- 1: erstes Element
- 2: zweites Element
- 3a, 3b: Reib-Verstellelement
- 4a, 4b, 4c, 4d: Verbindungsstellen
- 5a, 5b: Schwenkachsen
- 6: Schnittpunkt der Schwenkachsen
- 7: Halterung für Stellglied
- 8: Stellglied
- 9: Antrieb
- 10: Stellantrieb
- 11: verzahnter Bereich
- 12: Kette
- 13: Kettenglieder
- 14: ringförmiger Rand/ringförmigeWandung
- 15a, 15b, 15c, 15d: Mitnehmer
- 16: Wandung
- 17: Ausnehmungen für Getriebemittel
- 18: Getriebemittel
- 19: Ausnehmungen für Positionsermittlungseinrichtung
- 20: Positionsermittlungseinrichtung
- 21: Anschlüsse
- 22: Leitbleche
- 23: federnder Bereich der Reib-Verstellelemente
- 24: Schwenklager
- 25: Kalotte
- 26: eingeprägte Verzahnung
- 27: Lochung
- 28: Verbindungsöffnung
- 29: Verstrebungen
- 30: Nut
- 32: Leiterplatte
- 33: Schleifer
- 34: Freisparungen
- 35: Federmittel
- 36: Führungen
- 37: Spiel
- 38a, 38b: Abstützung
- 39: Schnappverbindung
- 40: Filmschamier

## Patentansprüche

1. Stellantrieb (10) für ein Kraftfahrzeug, wobei ein erstes Element (1) an dem Fahrzeug festlegbar ist und ein mit dem ersten Element (1) um zumindest eine Schwenkachse (5a,5b) schwenkbar verbundenes zweites Element (2) eine Halterung (7) für ein Stellglied (8) aufweist und das zweite Element (2) mit zumindest einem, von einem Antrieb (9) zwischen dem ersten und dem zweiten Element (1, 2) betätigbaren, Verstellelement und zumindest einem, an dem ersten Element anliegenden, Reibelement verbunden ist, **dadurch gekennzeichnet, daß** zumindest ein Reibelement mit einem Verstellelement ein einstückiges Reib-Verstellelement (3a, 3b) bildet, das als Verbindungsmittel zwischen dem ersten und dem zweiten Element (1, 2) dient und das Reib-Verstellelement (3a, 3b) auf Zug belastet ist.

2. Stellantrieb nach Anspruch 1, **dadurch gekennzeichnet, daß** zumindest ein Reib-Verstellelement (3a, 3b) ein Metallband, ein Verbundteil oder ein technisches Kunststoffteil mit mindestens einem verzahnten Bereich (11) ist.

3. Stellantrieb nach Anspruch 2, **dadurch gekennzeichnet, daß** der verzahnte Bereich (11) durch eine eingeprägte Verzahnung (26) gebildet ist.

4. Stellantrieb nach Anspruch 2, **dadurch gekennzeichnet, daß** der verzahnte Bereich (11) durch eine Lochung (27) gebildet ist.

5. Stellantrieb nach Anspruch 2, **dadurch gekennzeichnet, daß** der verzahnte Bereich (11) durch Tiefziehen oder Stanzen und Biegen hergestellt ist.

6. Stellantrieb nach Anspruch 1, 2, 3, 4 oder 5, **dadurch gekennzeichnet, daß** zumindest ein Reib-Verstellelement (3a, 3b) an Verbindungsstellen (4a, 4b, 4c, 4d) mit dem zweiten Element (2) verbunden ist.

7. Stellantrieb (10) für ein Kraftfahrzeug, wobei ein erstes Element (1) an dem Fahrzeug festlegbar ist und ein mit dem ersten Element (1) um zumindest eine Schwenkachse (5a,5b) schwenkbar verbundenes zweites Element (2) eine Halterung (7) für ein Stellglied (8) aufweist und das zweite Element (2) mit zumindest einem, von einem Antrieb (9) zwischen dem ersten und dem zweiten Element (1,2) betätigbaren, Verstellelement und zumindest einem, an dem ersten Element anliegenden, Reibelement verbunden ist, **dadurch gekennzeichnet, daß** eine mehrgliedrige Kette (12) als ein Reib-Verstellmittel (3a; 3b) dient und daß die Kette (12) auf Zug belastet ist.

8. Stellantrieb, nach Anspruch 7, **dadurch gekennzeichnet, daß** der Antrieb in oder zwischen Kettenglieder (13) der Kette (12) eingreift.

9. Stellantrieb nach Anspruch 1, 2, 3, 4, 5, 6, 7 oder 8, **dadurch gekennzeichnet, daß** das zweite Element (2) um zwei rechtwinklig zueinander angeordnete Schwenkachsen (5a, 5b) schwenkbar ist, wobei für jede Schwenkachse ein Reib-Verstellelement (3a, 3b) oder eine Kette (12) vorgesehen ist.

10. Stellantrieb nach Anspruch 9, **dadurch gekennzeichnet, daß**
- die beiden Reib-Verstellelemente (3a, 3b) unabhängig voneinander antreibbar sind,
- jedes Reib-Verstellelement (3a, 3b) an zumindest zwei der Verbindungsstellen (4a, 4b, bzw. 4c, 4d) mit dem zweiten Element (2) verbunden ist,
- bei Verwendung zweier Verbindungsstellen (4a, 4b, bzw. 4c, 4d) je Reib-Verstellelement (3a, 3b), jeweils eine Verbindungsstelle (4a, 4b) des zweiten Elements (2) mit dem ersten Reib-Verstellelement (3a) auf eine Verbindungsstelle (4c, 4d) des zweiten Elements (2) mit dem zweiten Reib-Verstellelements (3b) folgt, wobei die Verbindungsstellen (4a, 4c, 4b, 4d) in einem gleichmäßigen Winkelabstand von 90° in bezug auf einen Schnittpunkt (6) der beiden Schwenkachsen (5a ,5b) angeordnet sind,
- jedes Reib-Verstellelement (3a, 3b) das erste Element (1) umfaßt und
- die Reib-Verstellelemente (3a, 3b) zumindest teilweise im oder am ersten Element (1) geführt sind.

11. Stellantrieb nach Anspruch 10, **dadurch gekennzeichnet, daß** die beiden Reib-Verstellelemente (3a, 3b) so geformt oder angeordnet sind, daß sie sich nicht gegenseitig behindern können und/oder daß sie aufeinander gleiten.

12. Stellantrieb nach Anspruch 10 oder 11, **dadurch gekennzeichnet, daß** die beiden Reib-Verstellelemente (3a, 3b) sich auf unterschiedlichen Bahnen und zumindest teilweise mit unterschiedlichem Abstand zum Schnittpunkt (6) der Schwenkachsen (5a, 5b) bewegen.

13. Stellantrieb nach zumindest einem der vorhergehenden Ansprüche, **dadurch gekennzeichnet, daß** zumindest auf ein Reib-Verstellelement (3a, 3b) im Stillstand und im Betrieb Zugkräfte wirken.

14. Stellantrieb nach zumindest einem der vorhergehenden Ansprüche, **dadurch gekennzeichnet, daß** das zweite Element (2) im wesentlichen steif ausgebildet ist.

15. Stellantrieb nach Anspruch 14, **dadurch gekennzeichnet, daß** das zweite Element (2) mit einem/einer ringförmigen Rand/Wandung (14) versehen ist.

16. Stellantrieb nach Anspruch 15, **dadurch gekennzeichnet, daß** an dem/der ringförmigen Rand/Wandung (14) die Verbindungsstellen (4a, 4b, 4c, 4d) zu dem zumindest einen Reib-Verstellelement (3a, 3b) angeformt sind.

17. Stellantrieb nach Anspruch 14, 15 oder 16, **dadurch gekennzeichnet, daß** am zweiten Element (2) Federmittel (35) vorgesehen sind, an denen die Verbindungsstellen (4a, 4b, 4c, 4d) zwischen den Reib-Verstellelementen (3a, 3b) und dem zweiten Element (2) angeformt sind.

18. Stellantrieb nach Anspruch 17, **dadurch gekennzeichnet, daß** im zweiten Element (2) schlitzförmige Freisparungen (34) vorgesehen sind, durch welche die Federmittel (35) gebildet werden.

19. Stellantrieb nach zumindest einem der vorhergehenden Ansprüche, **dadurch gekennzeichnet, daß** zumindest ein Reib-Verstellelement (3a, 3b) gelenkig mit dem zweiten Element (2) verbunden ist.

20. Stellantrieb nach zumindest einem der vorhergehenden Ansprüche, **dadurch gekennzeichnet, daß** zwischen dem ersten (1) und dem zweiten Element (2) ein Schwenklager (24) vorgesehen ist, das nur von einem oder von zwei Reib-Verstellelementen (3a, 3b) zusammengehalten wird.

21. Stellantrieb nach zumindest einem der vorhergehenden Ansprüche, **dadurch gekennzeichnet, daß** in einer Wandung (16) des ersten Elements (1) Ausnehmungen (17) vorhanden sind, durch welche Getriebemittel (18) des Antriebes (9) mit den Reib-Verstellelementen (3a, 3b) in Eingriff kommen können.

22. Steilantrieb nach zumindest einem der vorhergehenden Ansprüche, **dadurch gekennzeichnet, daß** die Reib-Verstellelemente (3a, 3b) rechtwinklig zur Verstellrichtung flexibel oder starr ausgebildet sind.

23. Stellantrieb nach zumindest einem der vorhergehenden Ansprüche, **dadurch gekennzeichnet, daß** bei flexibler Ausbildung die Reib-Verstellelemente (3a, 3b) an deren Verbindungsstellen (4a, 4b, 4c, 4d) mit dem zweiten Element (2) seitlich fixiert sind.

24. Stellantrieb nach zumindest einem der vorhergehenden Ansprüche, **dadurch gekennzeichnet, daß** die Winkel der Reib-Verstellelemente (3a, 3b) zueinander in den Extremstellungen des zweiten Elements (2) geringfügig von 90° abweichen können.

25. Stellantrieb nach zumindest einem der vorhergehenden Ansprüche, **dadurch gekennzeichnet, daß** bei starrer Ausbildung zumindest ein Reib-Verstellelement (3a, 3b) an zumindest einer Verbindungsstelle (4a, 4b, 4c, 4d) mit dem zweiten Element (2) seitliche Ausweichmöglichkeiten besitzt.

26. Stellantrieb nach zumindest einem der vorhergehenden Ansprüche, **dadurch gekennzeichnet, daß** zumindest ein Reib-Verstellelement (3a, 3b) am ersten Element (1) in Führungen (36) seitlich geführt ist.

27. Stellantrieb nach Anspruch 26, **dadurch gekennzeichnet, daß** das Reib-Verstellelement (3a, 3b) in den Führungen (36) beidseitig geführt ist.

28. Stellantrieb nach Anspruch 26 oder 27, **dadurch gekennzeichnet, daß** zumindest ein Reib-Verstellelement (3a, 3b) mit keinem oder nur sehr geringem Spiel in den Führungen (36) längsbeweglich gelagert ist.

29. Stellantrieb nach Anspruch 28, **dadurch gekennzeichnet, daß** zumindest ein Reib-Verstellelement (3a, 3b) in Verbindung mit der Führung (36) als Verdrehsicherungselement dient.

30. Stellantrieb nach Anspruch 26, 27, 28 oder 29, **dadurch gekennzeichnet, daß** zumindest ein Reib-Verstellelement (3a, 3b) mit deutlichem Spiel (37) in den Führungen (36) längsbeweglich und geringfügig seitlich beweglich gelagert ist.

31. Stellantrieb nach zumindest einem der vorhergehenden Ansprüche, **dadurch gekennzeichnet, daß** der verzahnte Bereich (11) zumindest eines Reib-Verstellelements (3a, 3b) dem ersten Element (1) zugewandt ist oder um ca. 90° dazu angeordnet/ausgerichtet ist.

32. Stellantrieb nach Anspruch 31, **dadurch gekennzeichnet, daß** zumindest ein Reib-Verstellelement (3a, 3b) zumindest im Eingriffsbereich mit dem Getriebemittel (18) durch ein Abstützmittel (38a, 38b) abgestützt ist.

33. Stellantrieb nach Anspruch 32, **dadurch gekennzeichnet, daß** das Reib-Verstellelement (3a, 3b) durch eine Schnappverbindung (39) in der Führung gehalten wird.

34. Steilantrieb nach Anspruch 32, **dadurch gekennzeichnet, daß** das Abstützmittel (38a, 38b) einstückig mit dem ersten Element (1) oder einstückig mit dem zweiten Element (2) ist.

35. Stellantrieb nach zumindest einem der vorhergehenden Ansprüche, **dadurch gekennzeichnet, daß** zwischen dem ersten Element (1) und dem zweiten Element (2) ein Federelement angeordnet ist.

36. Stellantrieb nach Anspruch 35, **dadurch gekennzeichnet, daß** das Federelement einstückig mit dem ersten Element (1) oder dem zweiten Element(2) ist, oder daß ein zusätzliches Federelement vorgesehen ist.

37. Stellantrieb nach Anspruch 35 oder 36, **dadurch gekennzeichnet, daß** das Federelement versucht das zweite Element (2) vom ersten Element (1) weg zu bewegen und daß zumindest ein Reib-Verstellelement (3a, 3b) das zweite Element (2) gegen die Federwirkung des Federelements am ersten Element (1) hält.

38. Stellantrieb nach zumindest einem der vorhergehenden Ansprüche, **dadurch gekennzeichnet, daß** das erste Element (1) Ausnehmungen (19) in der Wandung (16) aufweist, durch welche zumindest eine Positionsermittlungseinrichtung (20) mit den Reib-Verstellelementen (3a, 3b) gekoppelt werden kann.

39. Stellantrieb nach zumindest einem der vorhergehenden Ansprüche, **dadurch gekennzeichnet, daß** ein Teil der Positionsermittlungseinrichtung (20) innerhalb des ersten Elements (1) angeordnet ist und ein zweiter Teil fest mit einem Reib-Verstellelement (3a, 3b) verbunden ist, wobei eine Verbindung zwischen den beiden Teilen durch die Wandung (16) des ersten Elementes hergestellt wird.

40. Stellantrieb nach zumindest einem der vorhergehenden Ansprüche, **dadurch gekennzeichnet, daß** die Positionsermittlungseinrichtung (20) nachträglich von außen auf das erste Element aufgesetzt und mechanisch sowie elektrisch mit diesem verbunden werden kann.

41. Stellantrieb nach zumindest einem der vorhergehenden Ansprüche, **dadurch gekennzeichnet, daß** das Stellglied (8) ein Kfz-Rückblickspiegel ist.

## Claims

1. An actuator (10) for a motor vehicle, in which a first member (1) is securable to the vehicle and a second member (2) connected to the first member (1) so as to be pivotable about at least one pivot axis (5a, 5b) comprises a retaining means (7) for an actuating member (8) and the second member (2) is connected to at least one displacement member actuable by a drive (9) between the first and the second members (1,2) and to at least one friction member resting against the first member, **characterized in that** at least one friction member with one displacement member forms a one-piece friction-displacement member (3a, 3b) which acts as a connexion means between the first and the second members (1, 2), and the friction-displacement member (3a, 3b) is stressed with tension.

2. An actuator according to Claim 1, **characterized in that** at least one friction-displacement member (3a, 3b) is a metal strip, a composite part or an industrial plastics-material part with at least one toothed region (11).

3. An actuator according to Claim 2, **characterized in that** the toothed region (11) is formed by an impressed set of teeth (26).

4. An actuator according to Claim 2, **characterized in that** the toothed region (11) is formed by a perforation (27).

5. An actuator according to Claim 2, **characterized in that** the toothed region (11) is produced by deep-drawing or stamping and bending.

6. An actuator according to Claim 1, 2, 3, 4 or 5, **characterized in that** at least one friction-displacement member (3a, 3b) is conneted to the second member (2) at connexion points (4a, 4b, 4c, 4d).

7. An actuator (10) for a motor vehicle, in which a first member (1) is securable to the vehicle and a second member (2) connected to the first member (1) so as to be pivotable about at least one pivot axis (5a, 5b) comprises a retaining means (7) for an actuating member (8) and the second member (2) is connected to at least one displacement member actuable by a drive (9) between the first and the second members (1,2) and to at least one friction member resting against the first member, **characterized in that** a multiple-link chain (12) acts as a friction-displacement means (3a, 3b), and the chain (12) is stressed with tension.

8. An actuator according to Claim 7, **characterized in that** the drive engages in or between links (13) of the chain (12).

9. An actuator according to Claim 1, 2, 3, 4, 5, 6, 7 or 8, **characterized in that** the second member (2) is pivotable about two pivot axes (5a, 5b) arranged at a right angle to each other, wherein a friction-displacement member (3a, 3b) or a chain (12) is provided for each pivot axis.

10. An actuator according to Claim 9, **characterized in that**
- the two friction-displacement members (3a, 3b) can be driven independently of each other;
- each friction-displacement member (3a, 3b) is connected to the second member (2) at at least two of the connexion points (4a, 4b or 4c, 4d respectively),
- when two connexion points (4a, 4b or 4c, 4d respectively) are used perfriction-displacement member (3a, 3b), one respective connexion point (4a, 4b) of the second member (2) with the first friction-displacement member (3a) follows on a connexion point (4c, 4d) of the second member (2) with the second friction-displacement member (3b), wherein the connexion points (4a, 4c, 4b, 4d) are arranged at a uniform angular distance of 90° with respect to a point of intersection (6) of the two pivot axes (5a, 5b),
- each friction-displacement member (3a, 3b) embraces the first member (1), and
- the friction-displacement members (3a, 3b) are guided at least in part in or on the first member (1).

11. An actuator according to Claim 10, **characterized in that** the two friction-displacement members (3a, 3b) are shaped or arranged in such a way that they cannot obstruct each other and/or that they slide on each other.

12. An actuator according to Claim 10 or 11, **characterized in that** the two friction-displacement members (3a, 3b) move on different paths and at least in part at different distances from the point of intersection (6) of the pivot axes (5a, 5b).

13. An actuator according to at least one of the preceding Claims, **characterized in that** tensile forces act at least upon a friction-displacement member (3a, 3b) during a stoppage and during operation.

14. An actuator according to at least one of the preceding Claims, **characterized in that** the second member (2) is made substantially rigid.

15. An actuator according to Claim 14, **characterized in that** the second member (2) is provided with an annular edge / wall (14).

16. An actuator according to Claim 15, **characterized in that** the connexion points (4a, 4b, 4c, 4d) to the at least one friction-displacement member (3a, 3b) are integrally formed on the annular edge / wall (14).

17. An actuator according to Claim 14, 15 or 16, **characterized in that** springing means (35) on which the connexion points (4a, 4b, 4c, 4d) between the friction-displacement members (3a, 3b) and the second member (2) are integrally formed, are provided on the second member (2).

18. An actuator according to Claim 17, **characterized in that** slot-shaped recesses (34), by which the springing means (35) are formed, are provided in the second member (2).

19. An actuator according to at least one of the preceding Claims, **characterized in that** at least one friction-displacement member (3a, 3b) is connected to the second member (2) in an articulated manner.

20. An actuator according to at least one of the preceding Claims, **characterized in that** a pivot bearing (24), which is held together only by one or two friction-displacement members (3a, 3b), is provided between the first member (1) and the second member (2).

21. An actuator according to at least one of the preceding Claims, **characterized in that** apertures (17), through which gearing means (18) of the drive (9) can engage with the friction-displacement members (3a, 3b), are present in a wall (16) of the first member (1).

22. An actuator according to at least one of the preceding Claims, **characterized in that** the friction-displacement members (3a, 3b) are made flexible at right angles to the direction of displacement or are made rigid.

23. An actuator according to at least one of the preceding Claims, **characterized in that** in the case of a flexible design the friction-displacement members (3a, 3b) are fixed laterally at their connexion points (4a, 4b, 4c, 4d) with the second member (2).

24. An actuator according to at least one of the preceding Claims, **characterized in that** the angles of the friction-displacement members (3a, 3b) from each other can deviate slightly from 90° at the end positions of the second member (2).

25. An actuator according to at least one of the preceding Claims, **characterized in that** in the case of a rigid design at least one friction-displacement member (3a, 3b) at at least one connexion point (4a, 4b, 4c, 4d) with the second member (2) is capable of deviating laterally.

26. An actuator according to at least one of the preceding Claims, **characterized in that** a least one friction-displacement member (3a, 3b) on the first member (1) is guided laterally in guides (36).

27. An actuator according to Claim 26, **characterized in that** the friction-displacement member (3a, 3b) is guided on both sides in the guides (36).

28. An actuator according to Claim 26 or 27, **characterized in that** at least one friction-displacement member (3a, 3b) is mounted so as to be movable longitudinally with no or only very slight play in the guides (36).

29. An actuator according to Claim 28, **characterized in that** at least one friction-displacement member (3a, 3b) acts as the means preventing rotation in conjunction with the guide (36).

30. An actuator according to Claim 26, 27, 28 or 29, **characterized in that** at least one friction-displacement member (3a, 3b) is mounted so as to be movable longitudinally with significant play (37) in the guides (36) and so as to be movable slightly laterally.

31. An actuator according to at least one of the preceding Claims, **characterized in that** the toothed region (11) of at least one friction-displacement member (3a, 3b) faces the first member (1) or is arranged / orientated at approximately 90° thereto.

32. An actuator according to Claim 31, **characterized in that** at least one friction-displacement member (3a, 3b) is supported at least in the engagement region with the gearing means (18) by a supporting means (38a, 38b).

33. An actuator according to Claim 32, **characterized in that** the friction-displacement member (3a, 3b) is held in the guide by a snap connexion (39).

34. An actuator according to Claim 32, **characterized in that** the supporting means (38a, 38b) is in one piece with the first member (1) or in one piece with the second member (2).

35. An actuator according to at least one of the preceding Claims, **characterized in that** a spring member is arranged between the first member (1) and the second member (2).

36. An actuator according to Claim 35, **characterized in that** the spring member is in one piece with the first member (1) or with the second member (2), or an additional spring member is provided.

37. An actuator according to Claim 35 or 36, **characterized in that** the spring member seeks to move the second member (2) away from the first member (1), and at least one friction-displacement member (3a, 3b) holds the second member (2) on the first member (1) against the springing action of the spring member.

38. An actuator according to at least one of the preceding Claims, **characterized in that** the first member (1) has recesses (19) in the wall (16), through which at least one position-determining device (20) can be coupled to the friction-displacement members (3a, 3b).

39. An actuator according to at least one of the preceding Claims, **characterized in that** part of the position-determining device (20) is arranged inside the first member (1) and a second part is rigidly connected to a friction-displacement member (3a, 3b), wherein a connexion between the two parts is formed by the wall (16) of the first member.

40. An actuator according to at least one of the preceding Claims, **characterized in that** the position-determining device (20) is mounted subsequently on the first member from the outside and can be connected both mechanically and electrically thereto.

41. An actuator according to at least one of the preceding Claims, **characterized in that** the actuating member (8) is a rear-view mirror of a motor vehicle.

## Revendications

1. Servomoteur (10) pour un véhicule automobile, dans lequel un premier élément (1) est susceptible d'être fixé sur le véhicule et un deuxième élément (2) relié à pivotement au premier élément (1) autour d'au moins un axe de pivotement (5a, 5b) présente une monture (7) pour un organe de réglage (8), et le deuxième élément (2) est relié avec au moins un élément de réglage actionnable par un entraînement (9) entre le premier élément (1) et le deuxième élément (2) et avec au moins un élément de friction reposant sur le premier élément, **caractérisé en ce qu'**au moins un élément de friction forme avec un élément de réglage un élément de réglage à friction (3a, 3b) en une seule pièce qui sert de moyen de liaison entre le premier élément (1) et le deuxième élément (2) et qui sollicite en traction l'élément de réglage à friction (3a, 3b).

2. Servomoteur selon la revendication 1, **caractérisé en ce qu'**au moins un élément de réglage à friction (3a, 3b) est un ruban métallique, une pièce composite ou une pièce technique en matière plastique avec au moins une région dentée (11).

3. Servomoteur selon la revendication 2. **caractérisé en ce que** la région dentée (11) est formée par une denture (26) estampée.

4. Servomoteur selon la revendication 2. **caractérisé en ce que** la région dentée (11) est formée par une perforation (27).

5. Servomoteur selon la revendication 2. **caractérisé en ce que** la région dentée (11) est réalisée par emboutissage ou découpage et pliage.

6. Servomoteur selon la revendication 1, 2, 3, 4 ou 5. **caractérisé en ce qu'**au moins un élément de réglage à friction (3a, 3b) est relié au deuxième élément (2) en des points de liaison (4a, 4b, 4c, 4d).

7. Servomoteur (10) pour un véhicule automobile, dans lequel un premier élément (1) est susceptible d'être fixé sur le véhicule et un deuxième élément (2) relié à pivotement au premier élément (1) autour d'au moins un axe de pivotement (5a, 5b) présente une monture (7) pour un organe de réglage (8), et le deuxième élément (2) est relié avec au moins un élément de réglage actionnable par un entraînement (9) entre le premier élément (1) et le deuxième élément (2) et avec au moins un élément de friction reposant sur le premier élément, **caractérisé en ce qu'**une chaîne (12) à plusieurs maillons sert d'élément de réglage à friction (3a, 3b) et **en ce que** la chaîne (12) est sollicitée en traction.

8. Servomoteur selon la revendication 7, **caractérisé en ce que** l'entraînement s'engage dans ou entre des maillons (13) de la chaîne (12).

9. Servomoteur selon la revendication 1, 2, 3, 4, 5, 6, 7 ou 8. **caractérisé en ce que** le deuxième élément (2) peut pivoter autour de deux axes de pivotement (5a, 5b) agencés perpendiculairement l'un à l'autre, un élément de réglage à friction (3a, 3b) ou une chaîne (12) étant prévue pour chaque axe de pivotement.

10. Servomoteur selon la revendication 9, **caractérisé en ce que** :
- les deux éléments de réglage à friction (3a, 3b) peuvent être entraînés indépendamment l'un de l'autre,
- chaque élément de réglage à friction (3a, 3b) est relié au deuxième élément (2) en au moins deux des points de liaison (4a, 4b ou 4c, 4d),
- lorsqu'on utilise deux points de liaison (4a, 4b ou 4c, 4d), par élément de réglage à friction (3a, 3b), un point de liaison respectif (4a, 4b) du deuxième élément (2) avec le premier élément de réglage à friction (3a) succède à un point de liaison (4c, 4d) du deuxième élément (2) avec le deuxième élément de réglage à friction (3b), les points de liaison (4a, 4b, 4c, 4d) étant agencés à un écartement angulaire régulier de 90° par rapport à un point d'intersection (6) des deux axes de pivotement (5a, 5b),
- chaque élément de réglage à friction (3a, 3b) entoure le premier élément (1), et
- les éléments de réglage à friction (3a, 3b) sont guidés au moins partiellement dans ou sur le premier élément (1).

11. Servomoteur selon la revendication 10, **caractérisé en ce que** les deux éléments de réglage à friction (3a, 3b) sont formés ou agencés de telle sorte qu'ils ne peuvent pas se gêner mutuellement et/ou qu'ils glissent l'un sur l'autre.

12. Servomoteur selon l'une ou l'autre des revendications 10 et 11, **caractérisé en ce que** les deux éléments de réglage à friction (3a, 3b) se déplacent sur des trajectoires différentes et au moins partiellement avec des distances différentes par rapport au point d'intersection (6) des axes de pivotement (5a, 5b).

13. Servomoteur selon l'une au moins des revendications précédentes, **caractérisé en ce que** des forces de traction agissent au moins sur un élément de réglage à friction (3a, 3b) à l'arrêt ou en fonctionnement.

14. Servomoteur selon l'une au moins des revendications précédentes, **caractérisé en ce que** le deuxième élément (2) est réalisé sensiblement rigide.

15. Servomoteur selon la revendication 14, **caractérisé en ce que** le deuxième élément (2) est pourvu d'un bord/d'une paroi (14) annulaire.

16. Servomoteur selon la revendication 15, **caractérisé en ce que** sur le bord/la paroi annulaire (14) sont formés les points de liaison (4a, 4b, 4c, 4d) avec ledit au moins un élément de réglage à friction (3a, 3b).

17. Servomoteur selon l'une quelconque des revendications 14, 15, ou 16, **caractérisé en ce que** sur le deuxième élément (2) sont prévus des moyens à ressort (35) sur lesquels sont formés les points de liaison (4a, 4b, 4c, 4d) entre l'élément de réglage à friction (3a, 3b) et le deuxième élément (2).

18. Servomoteur selon la revendication 17, **caractérisé en ce que** dans le deuxième élément (2) sont prévues des ouvertures (34) en forme de fentes à travers lesquelles sont formés les moyens à ressort (35).

19. Servomoteur selon l'une au moins des revendications précédentes, **caractérisé en ce qu'**au moins un élément de réglage à friction (3a, 3b) est relié de manière articulée au deuxième élément (2).

20. Servomoteur selon l'une au moins des revendications précédentes, **caractérisé en ce qu'**entre le premier élément (1) et le deuxième élément (2) est prévu un palier de pivotement (24) qui n'est retenu que par un ou par deux éléments de réglage à friction (3a, 3b).

21. Servomoteur selon l'une au moins des revendications précédentes, **caractérisé en ce que** dans la paroi (16) du premier élément (1) se trouvent des évidements (17) à travers lesquels des moyens de transmission (18) de l'entraînement (9) peuvent venir en engagement avec les éléments de réglage à friction (3a, 3b).

22. Servomoteur selon l'une au moins des revendications précédentes, **caractérisé en ce que** les éléments de réglage à friction (3a, 3b) sont réalisés flexibles ou rigides en angle droit par rapport à la direction de déplacement.

23. Servomoteur selon l'une au moins des revendications précédentes, **caractérisé en ce qu'**en cas de réalisation flexible, les éléments de réglage à friction (3a, 3b) sont fixés latéralement au deuxième élément (2) au niveau de leurs points de liaison (4a, 4b, 4c, 4d).

24. Servomoteur selon l'une au moins des revendications précédentes, **caractérisé en ce que** les angles des éléments de réglage à friction (3a, 3b) l'un par rapport à l'autre peuvent légèrement dévier de 90° dans les positions extrêmes du deuxième élément (2).

25. Servomoteur selon l'une au moins des revendications précédentes, **caractérisé en ce qu'**en cas de réalisation rigide, au moins un élément de réglage à friction (3a, 3b) possède des possibilités de déviation latérale au moins au niveau d'un point de liaison (4a, 4b, 4c, 4d) avec le deuxième élément (2).

26. Servomoteur selon l'une au moins des revendications précédentes, **caractérisé en ce qu'**au moins un élément de réglage à friction (3a, 3b) est guidé latéralement dans des guidages (36) sur le premier élément (1).

27. Servomoteur selon la revendication 26, **caractérisé en ce que** l'élément de réglage à friction (3a, 3b) est guidé des deux côtés dans les guidages (36).

28. Servomoteur selon l'une ou l'autre des revendications 26 et 27, **caractérisé en ce qu'**au moins un élément de réglage à friction (3a, 3b) est monté à déplacement longitudinal sans jeu ou avec seulement un très faible jeu dans les guidages (36).

29. Servomoteur selon la revendication 28, **caractérisé en ce qu'**au moins un élément de réglage à friction (3a, 3b) sert d'élément anti-rotation en liaison avec le guidage (36).

30. Servomoteur selon l'une quelconque des revendications 26, 27, 28 ou 29, **caractérisé en ce qu'**au moins un élément de réglage à friction (3a, 3b) est monté dans les guidages (36) avec un jeu important en déplacement longitudinal et avec un faible déplacement latéral.

31. Servomoteur selon l'une au moins des revendications précédentes, **caractérisé en ce que** le la région dentée (11) d'au moins un élément de réglage à friction (3a, 3b) est tournée vers le premier élément (1) ou est agencée/orientée à 90° par rapport à celui-ci.

32. Servomoteur selon la revendication 31, **caractérisé en ce qu'**au moins un élément de réglage à friction (3a, 3b) est soutenu par un moyen de soutien (38a, 38b) au moins dans la région d'engagement avec le moyen de transmission (18).

33. Servomoteur selon la revendication 32, **caractérisé en ce que** l'élément de réglage à friction (3a, 3b) est maintenu dans les guidages par une liaison à encliquetage (39).

34. Servomoteur selon la revendication 32, **caractérisé en ce que** le moyen de soutien (38a, 38b) est d'un seul tenant avec le premier élément (1) ou d'un seul tenant avec le deuxième élément (2).

35. Servomoteur selon l'une au moins des revendications précédentes, **caractérisé en ce qu'**un élément à ressort est agencé entre le premier élément (1) et le deuxième élément (2).

36. Servomoteur selon la revendication 35, **caractérisé en ce que** l'élément à ressort est d'un seul tenant avec le premier élément (1) ou avec le deuxième élément (2) ou **en ce qu'**il est prévu un élément à ressort additionnel.

37. Servomoteur selon l'une ou l'autre des revendications 35 et 36, **caractérisé en ce que** l'élément à ressort tend à éloigner le deuxième élément (2) du premier élément (1) et **en ce qu'**au moins un élément de réglage à friction (3a, 3b) maintient le deuxième élément (2) sur le premier élément (1) contre l'effet de ressort de l'élément à ressort.

38. Servomoteur selon l'une au moins des revendications précédentes, **caractérisé en ce que** le premier élément (1) présente des évidements (19) dans la paroi (16) à travers lesquels au moins un dispositif de détermination de position (20) peut être couplé à l'élément de réglage à friction (3a, 3b).

39. Servomoteur selon l'une au moins des revendications précédentes, **caractérisé en ce qu'**une partie du dispositif de détermination de position (20) est agencée à l'intérieur du premier élément (1) et **en ce qu'**une deuxième partie est reliée de manière solidaire avec un élément de réglage à friction (3a, 3b), une liaison entre les deux parties étant établie par la paroi (16) du premier élément.

40. Servomoteur selon l'une au moins des revendications précédentes, **caractérisé en ce que** le dispositif de détermination de position (20) est placé ultérieurement depuis l'extérieur sur le premier élément et peut être relié à celui-ci sur le plan mécanique et électrique.

41. Servomoteur selon l'une au moins des revendications précédentes, **caractérisé en ce que** l'organe de réglage (8) est un rétroviseur de voiture.
